# EUROPEAN PATENT SPECIFICATION

(11) **EP 3 520 251 B1**
(45) Date of publication and mention of the grant of the patent: **26.10.2022**
(21) Application number: 17856991.9
(22) Date of filing: 11.08.2017
(51) Int. Cl.: H04B 10/116, G06K 9/00, H04N 7/18, H04W 12/06

(54) **DATA PROCESSING AND AUTHENTICATION OF LIGHT COMMUNICATION SOURCES**
DATENVERARBEITUNG UND AUTHENTIFIZIERUNG VON LICHTKOMMUNIKATIONSQUELLEN
TRAITEMENT DE DONNÉES ET AUTHENTIFICATION DE SOURCES DE COMMUNICATION LUMINEUSE

(30) Priority: 30.09.2016 US 201615282328
(43) Date of publication of application: 07.08.2019
(73) Proprietor: Intel Corporation, Santa Clara, CA 95054 (US)
(72) Inventor: ROBERTS, Richard D., Hillsboro, Oregon 97124 (US); SEDDIGHRAD, Parmoon, Portland, Oregon 97229 (US); PEREZ-RAMIREZ, Javier, North Plains, Oregon 97133 (US); ABIRI, Roni, 43728 Raanana (IL)
(74) Representative: Rummler, Felix
(86) International application number: PCT/US2017/046611
(87) International publication number: WO 2018/063532

(56) References cited:
- EP-A1- 2 940 897
- EP-A1- 2 940 899
- EP-A2- 1 981 183
- WO-A1-2014/200268
- WO-A2-2014/063150
- US-A1- 2014 212 145
- US-A1- 2015 062 114
- US-A1- 2015 188 629
- US-A1- 2015 302 421
- US-A1- 2016 005 309
- US-A1- 2016 036 484

## Description

### PRIORITY APPLICATION

This application claims the benefit of priority to U.S. Application Serial No. 15/282,328, filed 30 September 2016.

### TECHNICAL FIELD

Embodiments described herein generally relate to processing techniques of data from light communication sources, and in particular, to the use of authentication and data interpretation techniques for data obtained from visible light via optical camera communication sources.

### BACKGROUND

Visible light communications are embodied in a variety of emerging wireless communication techniques, such as in communications techniques that utilize light sources such as light-emitting diode (LED) signage and LED lamps to broadcast messages. A variety of applications have been proposed in the area of visible light communication, including for specialized deployments of wireless data networks that serve as a high-speed link for a last mile transmission of a network connection. In many uses of visible light communications, the brightness of the light source is modulated faster than the human eye may observe, allowing a light source to transmit messages without a perceivable flicker.

One implementation of visible light communications, optical camera communications, also known as "CamCom", uses an image sensor within a camera for receiving and processing visible (human- or camera-visible) light data. One proposal for the standardization of optical camera communications is currently being developed by the Short-Range Optical Wireless Communications Task Group for a revision of the IEEE 802.15.7-2011 specification. For example, this task group is developing enhanced standards for the use of optical camera communications to enable scalable data rate, positioning/localization, and message broadcasting, using optical devices such as a flash, display, and image sensor as a transmitting or receiving device.

US 2016/005309 A1 discusses an information communication method for use in a portable terminal, e.g., a wristwatch, to obtain information includes a light receiving step of, by at least one of plural solar cells incorporated in the portable terminal and having respective directivities, receiving visible light that is emitted in a direction corresponding to the directivity of the relevant solar cell, and an information acquisition step of obtaining information by demodulating a signal that is specified by the received visible light.

EP 2940897 A1 discusses an information communication method that enables communication between various devices including: transmitting position information indicating a position of an image sensor; receiving an ID list; setting an exposure time of the image sensor; obtaining a bright line image including a bright line, by capturing a subject by the image sensor; obtaining information by demodulating data specified by a pattern of the bright line included in the obtained bright line image; and searching the ID list for identification information that includes the obtained information.

WO 2014/063150 A2 discusses a self-identifying optical transmitter for broadcasting a one-way authentication code using light-based communication. The transmitter includes a memory for storing an identifier of the transmitter, a processor for generating a data signal including an identifier of the transmitter, a modulator for receiving the data signal and generating an electrical signal, the modular generating the electrical signal by modulating the data signal.

EP 1981183 A2 discusses establishing ad hoc wireless communication between users that do not necessarily have MAC addresses and the like for one another. For example, a first user visually selects a second user and points a coherent light beam at an electronic device employed by the second user. Data specific to the first user is modulated on the coherent light beam, which can then be demodulated when the coherent light beam is received by the electronic device of the second user.

EP 2940899 A1 discusses enabling communication between various devices including: setting an exposure time of an image sensor; obtaining a bright line image including a bright line, by capturing a subject that changes in luminance by the image sensor with the set exposure time; setting a longer exposure time than the exposure time; obtaining a normal captured image by image capture by the image sensor with the longer exposure time; generating a synthetic image by specifying, in the normal captured image, a part that corresponds to the bright line included in the bright line image and superimposing a signal object on the normal captured image, the signal object being an image indicating the part; displaying the synthetic image; and obtaining information by demodulating data specified by a pattern of the bright line included in the obtained bright line image.

### SUMMARY

The invention is defined in the claims. In the following description, any embodiment referred to and not falling within the scope of the claims is merely an example useful to the understanding of the invention.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:

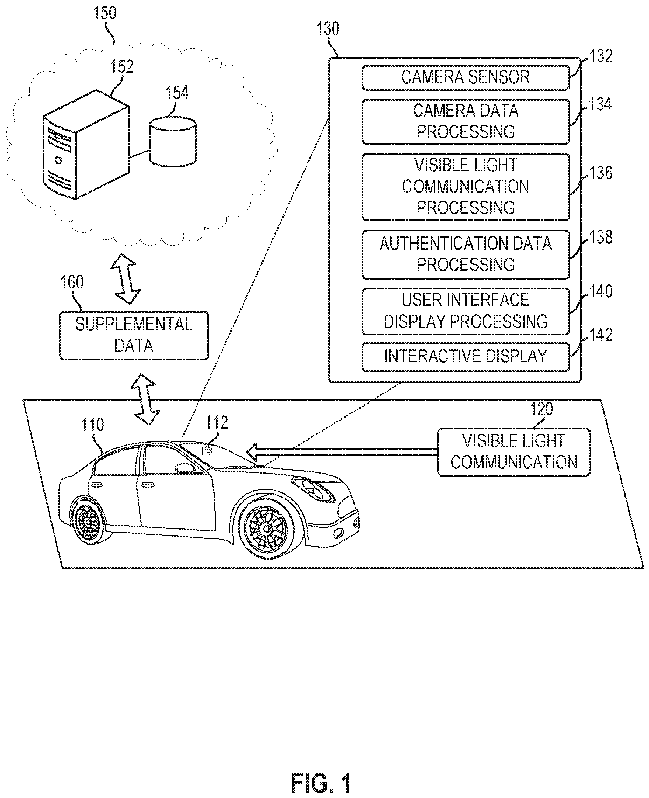

**FIG. 1** illustrates an operational environment for processing and authenticating light communication sources with components of a motor vehicle, according to an example;
**FIG, 2A** illustrates a stylized representation of a camera-captured scene observed from a motor vehicle, indicating multiple light communication sources, according to an example;
**FIG, 2B** illustrates a stylized representation of a camera-captured scene observed from a motor vehicle, indicating an authentication of a particular light communication source from among multiple light communication sources, according to an example;
**FIG. 3** illustrates a stylized representation of a camera-captured scene from a motor vehicle, indicating an authentication of multiple light communication sources in a restricted field of view, according to an example;
**FIG, 4** illustrates a sequence diagram of operations for selecting and interpreting optically communicated data among components of an optical camera communications system, according to an example;
**FIG. 5** is a flowchart illustrating a method of obtaining and processing modulated light data in an optical camera communications system using a user authentication technique, according to an example;
**FIG. 6** is a flowchart illustrating a method of obtaining and processing modulated light data in an optical camera communications system using an automatic authentication technique, according to an example;
**FIG. 7** illustrates a block diagram of components in an example system for processing and authenticating modulated light data using optical camera communications, according to an example; and
**FIG. 8** illustrates a block diagram for an example electronic processing system architecture upon which any one or more of the techniques (e.g., operations, processes, methods, and methodologies) discussed herein may be performed, according to an example.

### DETAILED DESCRIPTION

In the following description, methods, configurations, and related apparatuses are disclosed for the processing and authentication of image data detected from camera image object sources, for image data that indicates modulated light communicated using visible light communications. In particular, the techniques discussed herein are relevant to the application of visible light communication commonly referred to as optical camera communications, which utilizes light emitting objects such as LED signage and LED lights to output (transmit) data to be captured (received) via an image sensor in a camera. Various device-based and system-based techniques for analyzing such image data that includes modulated light data and authenticating the source of modulated light data from the image data are disclosed herein.

Authentication, as used in the contexts discussed herein, refers to providing or determining a proof of identity before a data source associates with (e.g., provides data to) a data sink. As a similar example of authentication, in IEEE 802.11 (Wi-Fi) wireless communication networks, authentication frame exchanges are used to ensure that a station has the correct authentication information (e.g., a pre-shared WEP/WPA encryption key) before being able to establish a connection with the wireless network. In this setting, the assumption is that if the encryption key is known, then the station is authorized to associate with the network. In the field of optical camera communications, there is a similar technical challenge to ensure that a received data stream is provided from an authenticated source before allowing that data to initiate further actions on a receiving device. Because many types of visible light communications are openly broadcasted to any listener in observable range of the light, the ability to obtain data only from desired or trusted locations becomes a complex yet important issue.

In the examples of optical camera communications discussed herein, authentication is performed at a lower layer of processing, by visually identifying a data source in image data to confirm that the data sink desires to receive data from the visually observed data source. The identification of a desired data source may be used to locate, select, access, and process modulated light data from a desired light emitting object, while disregarding modulated light data detected from other light emitting objects. Thus, light sources that are not authenticated may be ignored and disregarded, preventing the use of unknown, unwanted, unverified, unauthorized, or rogue data.

As discussed herein, optical camera communication authentication techniques may include the identification and selection of a modulated light data source, performed using either human input or automated object recognition upon image data of the light emitting object. The use of image data for authentication enables proper verification of modulated light data from the desired source, because the image data obtained by a camera sensor captures light to visually recognize the object as it also captures the light used to transmit the modulated data. Accordingly, the optical camera communication authentication techniques discussed herein provide significant operational and security benefits over existing approaches that choose to consume and process all available modulated light data sources without authentication.

**FIG. 1** illustrates an example operational environment for processing and authenticating light communication sources with components of a motor vehicle. The following examples of **FIGS. 1** to **3** specifically describe use cases involving the capture of image data and modulated light data from a camera positioned at the perspective of a motor vehicle occupant, such as may occur when the occupant operates the motor vehicle on a roadway. The integration of the following example features may be provided in a motor vehicle with a factory-integrated telematics and infotainment system, or with an add-on telematics and infotainment device. However, it will be understood that the following optical camera communication authentication features may also be applicable to other forms of mobile computing devices that operate independently from a motor vehicle, such as with image and data processing capability provided in smartphones, wearable devices, tablets, portable personal computers, and like user-interactive/client devices embedded in other operational systems.

As shown, in **FIG. 1**, a motor vehicle 110 includes a camera device 112, which is positioned outward facing with respect to the motor vehicle 110 and the surrounding environment to detect and capture a scene in a field of view. The camera device 112 is shown as obtaining an optical image of the field of view from the forward direction of the motor vehicle 110, which includes visible light communication 120 being transmitted to the motor vehicle 110 from a light emitting object (such as LED signage). The lights in the light emitting object are modulated rapidly to indicate data in a fashion that that the human eye typically cannot see or observe (e.g., with rapidly blinking lights that are not perceivable to a human). The camera device 112 includes at least one sensor to capture image data of the scene, and the camera device 112 may include or be operably coupled to processing circuitry to detect that at least one light of the light emitting object is modulated with data (e.g., is emitting the visible light communication 120).

The motor vehicle 110 includes a number of processing components 130 to obtain, process, and evaluate a scene in the field of view observed in front of the motor vehicle. Such processing capabilities operate to capture image data for real-world objects (such as still RGB images of the LED signage) and the modulated light data provided in the visible light communication 120 (such as the modulated light data provided from operation of the LED signage). For example, the processing components 130 may include: a camera sensor 132 (e.g., CMOS/CCD sensor) to capture image data of a scene; camera data processing components 134 (e.g., implemented with programmed circuitry) to process, store, and extract data from the captured image data; and visible light communication processing components 136 (e.g., implemented with programmed circuitry) to detect and interpret modulated light data emitted from an object in the scene.

The processing components 130 may also include: authentication data processing components 138 (e.g., implemented with programmed circuitry) to implement user-interactive or automated authentication of light modulation data from a light emitting source (an object); user interface display processing components 140 (e.g., implemented with programmed circuitry) to receive user-interactive controls, including the generation of an augmented display of the image data; and an interactive display unit 142 (e.g., a touchscreen display hardware) to output a display of the image data and receive user input and commands for the display of the image data.

The processing components 130 or another component integrated with the motor vehicle 110 may also be used to access an external network source 150 (e.g., via the Internet), to obtain supplemental data 160 for use in the authentication or processing of data with the visible light communication 120. For example, the external network source 150 may provide a network-connected data processing server 152 (e.g., a web server) and data-hosting system 154 (e.g., a database) to serve the supplemental data in response to a request or a query from the processing components 130. For example, the visible light communication 120 may include data indicating a uniform request locator (URL) of the external network source 150, with the data processing server 152 and data-hosting system 154 adapted to serve the supplemental data 160 in response to the request or query.

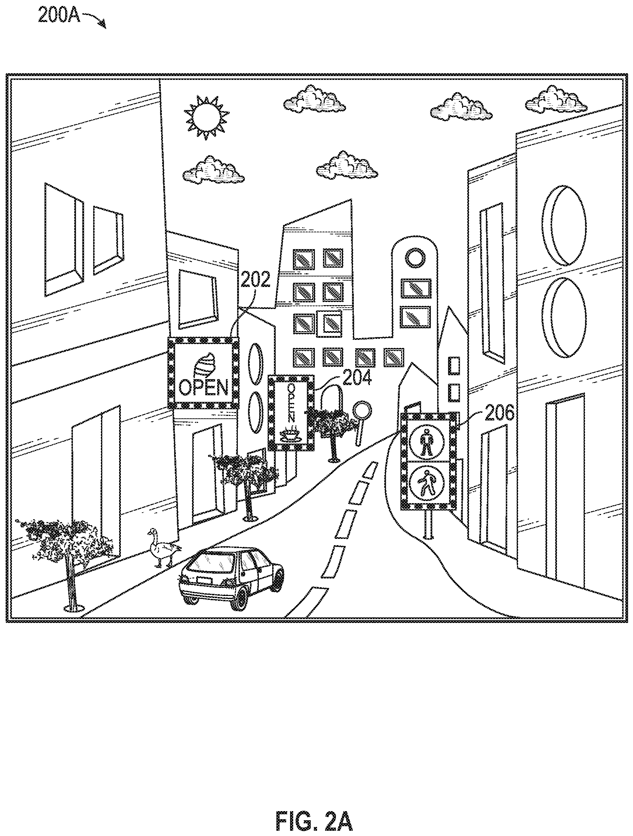

**FIG. 2A** illustrates a stylized representation 200A of an example camera-captured scene observed from a motor vehicle, indicating multiple light communication sources. The stylized representation 200A illustrates an output of image data including an image of three illuminated signs in a real-world environment: an ice cream shop sign 202, a coffee shop sign 204, and a traffic sign 206. Each illuminated sign includes LEDs that modulate light data in a specific pattern, to send respective sets of visible light communication data to be received and demodulated via a camera.

Thus, in the stylized representation 200A of **FIG. 2A**, each of the three illuminated signs 202, 204, 206 provide light output that is modulated in a pattern to signal data. As an initial processing step, a signal processor associated with the camera determines (e.g., locates, observes) which objects in the captured scene are transmitting optical camera communication data. This is important because in some examples only a few of the available LED light emitters in the scene actually transmit useable data. In an example, the identification of a light emitting source is performed using a specialized camera communications waveform, such as with use of a start frame delimiter. In other examples, the lights may use a specialized signaling output to indicate that they are a modulated light data source. In response to this determination, a signal processor associated with the camera identifies available light sources that are transmitting (e.g., broadcasting) data to an available observer.

The information on identified light sources is used in the authentication process, to determine which of the identified light sources provide a data stream available to be consumed by an associated processing system. A manual or automated authentication process then may be performed to select data from an available (identified) light source. For example, as shown in **FIG. 2A****,** in the image processor may generate a solid box (e.g., a colored box) around each light source (e.g., signs 202, 204, 206) that is transmitting modulated data. In an example, the image processor provides this indication as an overlay on the image data to highlight or emphasize real-world locations of an identified modulated light data source. The identification operates to highlight or mark an available data source to a human user or to an automated mechanism (with such automated mechanisms including an image recognition technique or image processing algorithm). Other methods and mechanisms for marking, listing, or identifying light emitting sources may also be utilized.

In an example, the information being sent by the modulated light data may include encoded information in the form of graphical, textual, or other software-interpretable content. As discussed above for **FIG. 1**, the information being sent by the modulated light data also may include a URL address that will be used by a processing system to access supplemental data (e.g., via a radio access network such as Wi-Fi or a 3G/4G data connection). After capturing and decoding the data, the stylized representation 200A may be updated to display the graphical, textual, or software-interpreted content.

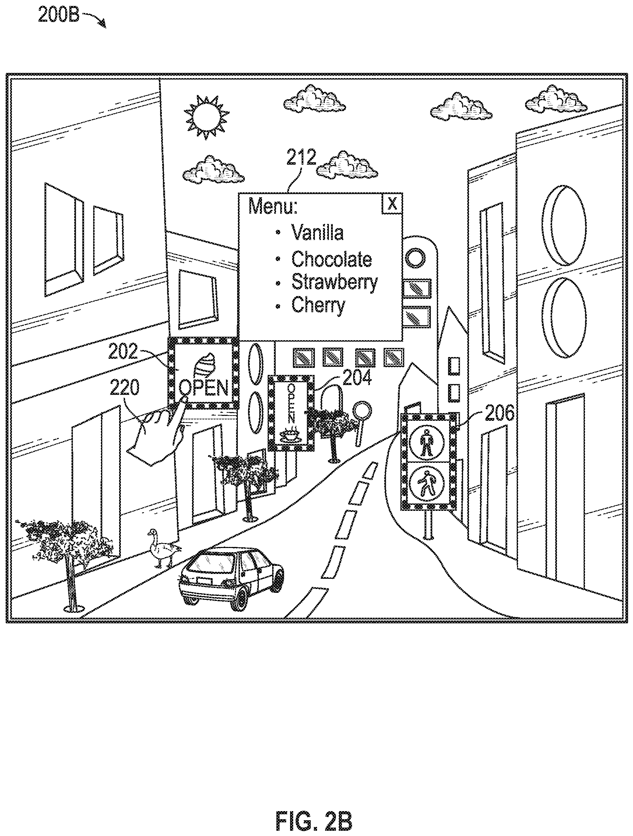

**FIG. 2B** illustrates a stylized representation 200B of an example camera-captured scene observed from a motor vehicle, indicating an authentication of a particular light communication source from among the multiple light communication sources. In the stylized representation 200B, authentication to select modulated light data from the ice cream shop sign 202 results in the processing and receipt of information used to display a contextual menu 212. The contextual menu 212 is provided as a message overlaid on the display output, in the form of an augmented reality output, next to the image display of the ice cream shop sign 202.

**FIG. 2B** thus illustrates an output on a graphical display, in the form of an overlay of content, which is output in response to authentication of the particular light communication source (the ice cream shop sign 202) and the processing of the information from this particular light communication source. In an example, authentication of the light communication source may occur using a manual, user-initiated process; in another example, authentication of the light communication source may occur using an automated process. After authentication is conducted, the image processing algorithms are then authorized to ingest data from the selected light source.

In a manual authentication operation, a human user may provide an indication, such as through an input into a graphical user interface, to indicate which data source that the user wishes to authenticate with and download data from. For example, the user may provide touch input 220 at a representation of the light emitting source (the display of the ice cream shop sign 202) to trigger a user interface command for authentication, as shown in the stylized representation 200B. In response to the touch input 220, the modulated light data from the ice cream shop sign 202 may be parsed and interpreted, to obtain content. In this scenario, a set of content to populate an available contextual menu (a food menu) of the ice cream shop establishment is received from optical camera communications, and is overlaid on the image data (as a contextual message 212) next to the representation of the object that transmitted the data. Thus, the content obtained from a light emitting source may be displayed and overlaid to a user in the form of augmented reality in the stylized representation 200B; it will be understood that the content obtained from the light emitting source may be output with other types of devices and output formats in response to authentication.

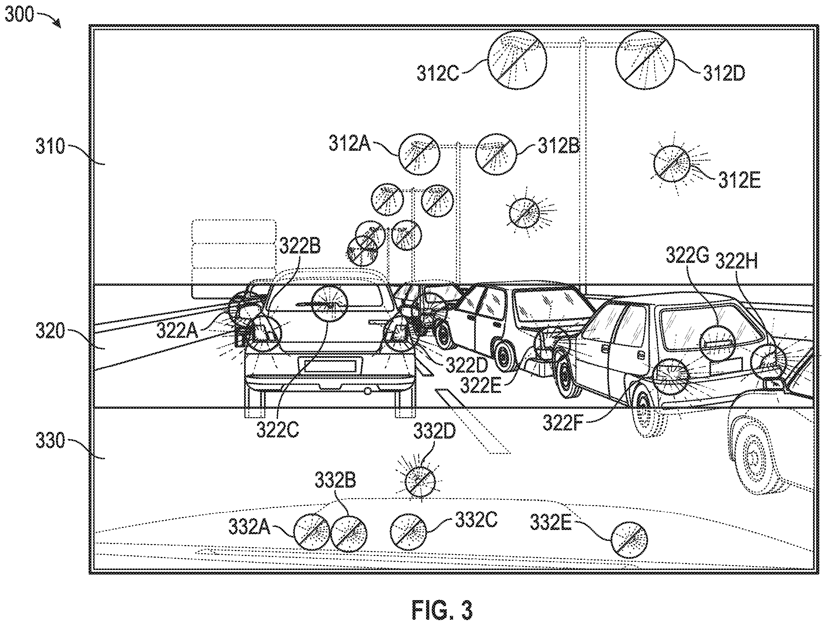

In an automatic authentication operation, the authentication may be automatically conducted to access and parse data from a particular data source. Such automatic authentication may occur through an image recognition algorithm that selects the data source for the user, on the basis of the shape, classification, characteristics, or identification of an object or type of object (such as a particular sign, type of business associated with the sign, etc.) For example, in a controlled mode, image recognition algorithms may be used to only allow data to be downloaded and processed from objects that are previously known, such as a pedestrian control light or a traffic signal. As another example, an automatic mode to authenticate with and process data from all identified sources (referred to as a "promiscuous mode") may be used to obtain a larger set of data from available sources. However, the selection of data from all available sources may be further limited based on the location of the objects in the field of view (such as is further described below with reference to **FIG. 3****.)**

In certain examples, the type, format, or characteristics of the content that is overlaid in a graphical display may be adapted based on the perspective of the field of view captured by an image. This change to the graphical display may occur when the size and observable characteristics of respective light sources varies, especially when the image of the scene is captured from various distances. In an example, the generation of the overlaid content for graphical display may be adapted to handle scenarios where a light emitting object such as signage is in the field of view but is mixed with other light sources (e.g., when observed at a long distance); when a light emitting object such as signage is visible and separated from other objects in the field of view (e.g., as depicted in **FIG. 2A** and **2B****)**; or when a light emitting object such as signage is only partially visible in the captured field of view (e.g., when observed at a close distance).

For example, as a motor vehicle travels on a roadway and is a large distance from a light source, an image of a scene may depict multiple light sources to be overlapping and concentrated in an area of the image. (The modulated light data may be detected and processed from these different sources, however.) At a closer location, the respective lights are distinguishable and separated from one another in the field of view. At an even closer location, when an observer is very close or has partially passed the light emitting object, the object may become distorted or not be fully visible. In cases where the light source is obscured, the graphical display may provide alternative graphics, a listing of detected light sources, contextual menus, and other forms of augmented views to allow obscured light sources and objects to be identified and distinguished.

**FIG. 3** illustrates a stylized representation 300 of a camera-captured scene from a motor vehicle, indicating an example of authentication of multiple light communication sources in a restricted field of view. **FIG. 3** specifically illustrates the results of an approach in which only light sources in roughly the same plane as the camera are automatically authenticated (and which lights are ignored for authentication).

The stylized representation 300 depicts the selection of desired sources based upon the elevation angle of a camera field of view, as shown in respective area of view 310, 320, 330. In the camera field of view, a first area of view 310 is adapted to identify an elevation that is too high, and a second area of view 330 is adapted to identify an elevation that is too low; whereas a third area of view 320 is adapted to identify an elevation of objects most likely to provide modulated light data. For example, the third area of view 330 may be the area that is most likely to provide modulated light data that the vehicle is interested in (such as brake system data or other vehicle-to-vehicle communication). In other examples, other elevations or areas of view may also provide modulated light data. In the scenario depicted by the stylized representation 300, lights from other motor vehicles in the field of view in front of the camera (e.g., lights 322A, 322B, 322C, 322D, 322E, 322F, 322G, 322H) convey modulated light data using the respective vehicles' rear-facing lights (tail lights), with the modulated light data indicating data such as motor vehicle speeds, system events, roadway conditions, and the like.

In an example, authentication of respective light communication sources is based upon angle of arrival. In this fashion, the camera may automatically authenticate with lights that are +- 5 degrees elevation, relative to the camera position. For example, in a field of view captured while driving a motor vehicle, this narrowed area eliminates many overhead street lights and reflections from the field of view. Thus, in the area of view 310, the overhead lights 312A, 312B, 312C, 312D, 312E are disregarded; likewise, in the area of view 330, the light reflections 332A, 332B, 332C, 332D, 332E are disregarded.

In still further examples, the field of view, the observed elevation angle, and the area used for automatic authentication may be modified based on the distance, clarity, and observation characteristics of respective light sources. For example, if a light source is obscured or not fully visible because the observer is too far away, too close, or past an observation angle for light emitting objects, the field of view may be modified to include or exclude additional areas of observation.

Although the preceding examples of **FIG. 1** to **3** were provided with reference to an infotainment or telematics system display in a motor vehicle, it will be understood that the techniques may be used for other variations of electronic image capture by personal electronic devices including mobile communication devices, wearables, and the like. For example, head-worn glasses that include a camera and projected display may operate to provide an augmented reality display using the techniques discussed above. Likewise, a smartphone including a camera and touchscreen display may provide an augmented reality or simulated reality display for browsing nearby information sources that are proximate to the user. Further, in addition to the commercial and advertising use cases suggested above, modulated light sources may be used to communicate information for games, entertainment, public safety, among many other use cases.

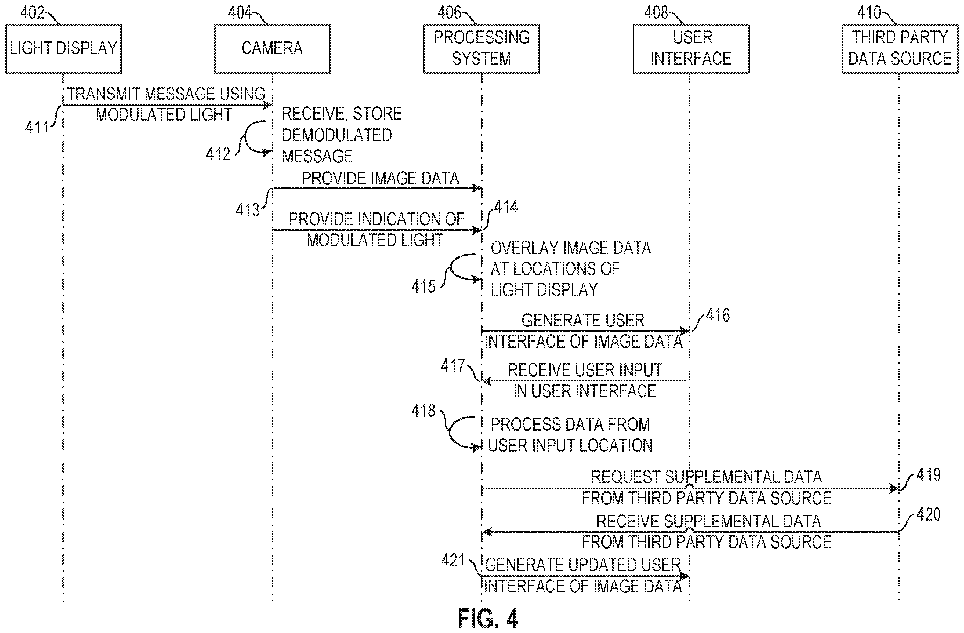

**FIG. 4** illustrates a sequence diagram of example operations for selecting and interpreting optically communicated data among components of an optical camera communications system. As shown, the optical camera communications system includes a light display 402 (e.g., a LED light emitting device); a camera 404; a processing system 406 (e.g., an electronic processing system); a user interface device 408 (e.g., a display output with an in-car infotainment system or mobile computing device); and a third party data source 410 (e.g., a remote web service).

As shown, the sequence diagram includes the transmission of a data message in modulated light (operation 411), from the light display 402 to the camera 404. The camera 404 operates to receive, detect, and store the modulated light data (operation 412), such as through the buffering of image data. The camera 404 further operates to provide the image data of the captured scene (operation 413) to the processing system 406, and also providing an indication of the modulated light (operation 414) to the processing system 406.

The processing system 406 operates to generate an output of the image data to include an indication of the light display 402 as an overlay of the image data (e.g., an augmented reality display) (operation 415). From this overlaid image data, a user interface of the image data is generated for output with the user interface device 408 (operation 416). This user interface includes an indication that identifies the location of respective data sources of modulated light to a human user, such as may be highlighted or outlined directly on the user interface screen. The user interface device 408 then receives a user input selection in the user interface to authenticate a light display located at the user input location (operation 417), which causes the processing system 406 to process data corresponding to the user input location (operation 418) (e.g., the modulated light obtained from the light display 402).

The data indicated from the user input location (e.g., the modulated light obtained from the light display 402) includes an indication of supplemental data at another source, such as the third party data source 410. In response, the processing system 406 transmits a request to obtain supplemental data from the third party data source 410 (operation 419), and receive the supplemental data from the third party data source 410 in response to this request (operation 420).

Based on the processed modulated light data obtained from the light display 402, and any supplemental data obtained from the third party data source 410, the processing system operates to generate an updated user interface of the image data for output on the user interface device 408 (operation 421). As discussed above, this may include an augmented reality of the processed content as an overlay over image data; other types of data outputs including simulated content, graphical content, multimedia and interactive content, may also be output via the user interface device 408.

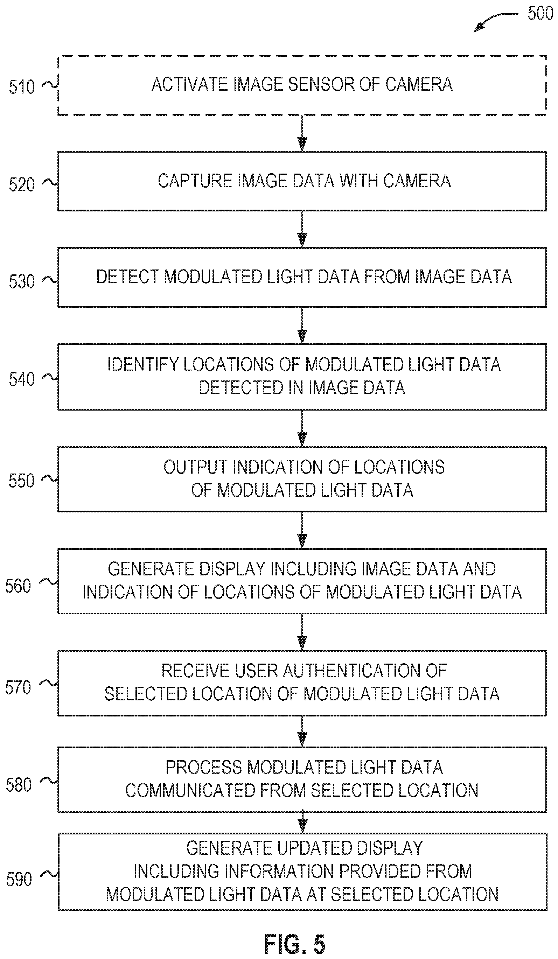

**FIG. 5** is a flowchart 500 illustrating an example method of obtaining and processing modulated light data in an optical camera communications system using a user authentication technique. The following operations of the flowchart 500 may be conducted by an electronic processing system (including a specialized computing system) adapted to process optical camera communications. It will be understood that the operations of the flowchart 500 may also be performed by other devices, with the sequence and type of operations of the flowchart 500 potentially modified based on the other examples of authentication provided above.

The operations of the flowchart 500 include the optional operation to activate the image sensor or other operational components of a camera (operation 510); in other examples, the image sensor is already activated or activated by another system component. The camera system is operated to capture image data of a scene with the camera (operation 520), with this image data including the capture of modulated light data. Modulated light data is detected from the image data (operation 530), and locations (e.g., sources) of the modulated light data are identified in the image data (operation 540).

Respective indications of the locations of the modulated light data are generated (operation 550), and a display of the image data and the indication of the locations of the modulated light data is output (operation 560). The user authentication may be received in the user interface, through a user selection of the location of the modulated light data (operation 570). In response to the user authentication, the modulated light data that is communicated from the selected location may be processed (operation 580) (e.g., parsed and interpreted), such as through re-processing of the image data, or re-capturing modulated light data from the selected location. The processing of the modulated light data may result in the obtaining of additional content, information, or other data provided from the modulated light data at the selected location, and the display of the image data and the indication of the locations of the modulated light data may be updated to reflect this additional content, information, or data (operation 590).

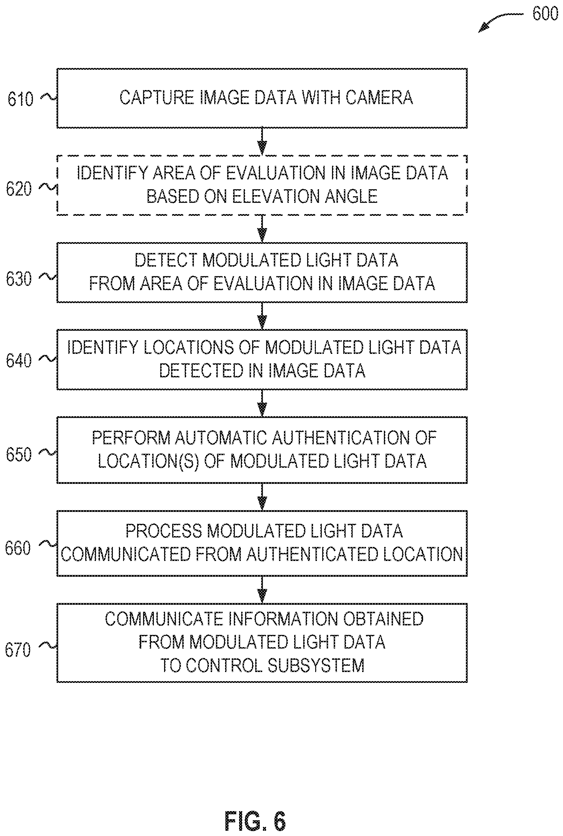

**FIG. 6** is a flowchart 600 illustrating an example method of obtaining and processing modulated light data in an optical camera communications system using an automatic authentication technique. Similar to **FIG. 5**, the operations of the flowchart 600 may be conducted by an electronic processing system (including a specialized computing system) adapted to process optical camera communications. Although the flowchart 600 depicts automated operations, it will be understood that the operations of the flowchart 600 may be modified based on additional user authentication and interaction operations discussed herein.

The operations of the flowchart 600 include the use of a camera system to capture image data of a scene with the camera (operation 610), with this image data including the capture of modulated light data. In an optional example, a narrowed area of evaluation is determined, based on the elevation angle of the imaged area (operation 620). This narrowed area of elevation may be used, for example, to disregard areas in the image data that are unlikely to include (or cannot include) relevant light emitting sources.

Within the area of evaluation, modulated light data is detected in the image data (operation 630), and locations of the modulated light data in the image data are detected (operation 640). The processing system then operates to perform an automatic authentication of one or more locations of modulated light data (operation 650), such as may be based on an image recognition of a particular object, type of object, or the detection of a data signal (e.g., signature, command) communicated from a particular object. The modulated light data from the one or more authenticated locations is then processed (operation 660), and information obtained the modulated light data of the one or more authenticated locations is communicated to another control subsystem (operation 670). This may include the communication of relevant data to a vehicle control subsystem, or the generation of information for output on a display system

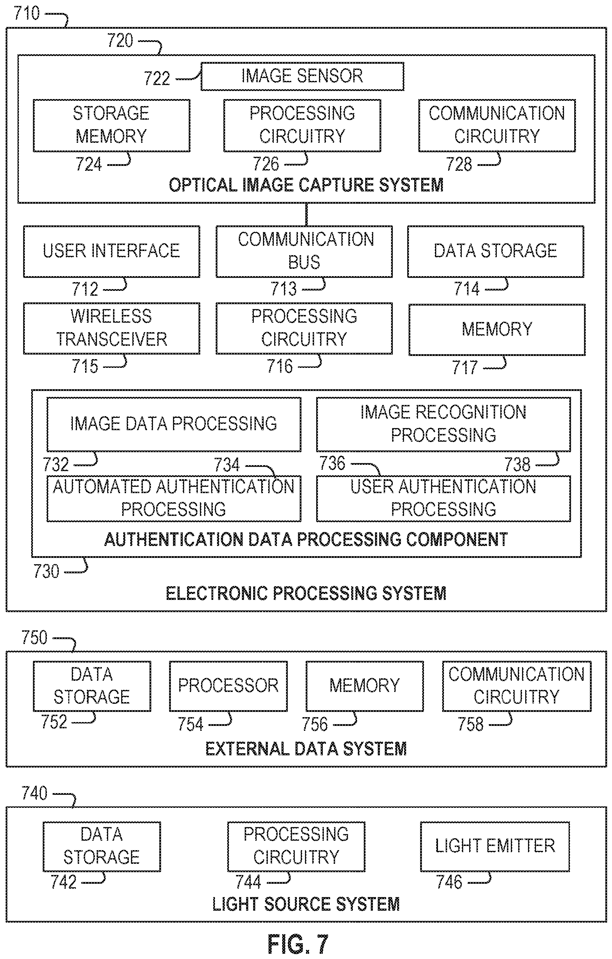

**FIG. 7** illustrates a block diagram of components in an example system for processing and authenticating modulated light data using optical camera communications. As shown, the block diagram depicts an electronic processing system 710 (e.g., a computing system), an external data system 750, and a light source system 740. The electronic processing system 710 includes circuitry (described below) operably coupled to an optical image capture system 720 and an authentication data processing component 730.

The electronic processing system 710 is depicted as including: circuitry to implement a user interface 712, e.g., to output a display with a user interface hardware device); a communication bus 713 to communicate data among the optical image capture system 720 and other components of the electronic processing system 710; data storage 714 to store image data, authentication data, and control instructions for operation of the electronic processing system; a wireless transceiver 715 to wirelessly communicate with an external network or devices; and processing circuitry 716 (e.g., a CPU) and a memory 717 (e.g., volatile or non-volatile memory) used to host and process the image data, authentication data, and control instructions for operation of the electronic processing system. In an example, the authentication data processing component 730 may be provided from specialized hardware operating independent from the processing circuitry 716 and the memory 717; in other examples, the authentication data processing component 730 may be softwareconfigured hardware that is implemented with use of the processing circuitry 716 and the memory 717 (e.g., by instructions executed by the processing circuitry 716 and the memory 717).

In the electronic processing system 710, the user interface 712 may be used to output a command and control interface for selection and receipt of user input for authentication, such as to authenticate a particular data source. The input of user authentication from the user interface 712 may be used to control operations and initiate actions with the authentication data processing component 730. The authentication data processing component 730 is depicted as including image data processing 732 to perform detection and analysis of image data; automated authentication processing 734 to perform an automatic recognition of modulated light data sources and content operations; user authentication processing 736 to generate the user-controlled interfaces and inputs to perform an manual authentication of image sources identified in images; and image recognition processing 738 to perform automatic identification of particular objects, types of objects, light sources and light types, and the like. The authentication data processing component 730 and the electronic processing system may also include other components, not depicted, for implementation of other forms of authentication and user interaction operations, such as input control components (e.g., buttons, touchscreen input, external peripheral devices), and output components (e.g., a touchscreen display screen, video or audio output, etc.).

The optical image capture system 720 is depicted as including: an image sensor 722 to capture image data of a scene (including modulated light data emitted in respective objects in a scene); storage memory 724 to buffer and store the image data of the scene; processing circuitry 726 to perform image processing of image data for a scene and identify modulated light data in the scene; and communication circuitry 728 to communicate the image data to another location. In an example, the optical image capture system 720 is adapted to capture human-visible light; in some examples, the optical image capture system 720 is additionally adapted to capture aspects of infrared and nearinfrared light.

The light source system 740 is depicted as including: a data storage 742 to store commands and content for communication via modulated light output; processing circuitry 744 to control the modulated light output; and a light emitter 746 (e.g., a LED or LED array) to generate the modulated light output.

The external data system 750 is depicted as including: data storage 752 to host supplemental content for access by the electronic processing system 710; a processor 754 and memory 756 to execute software instructions to host and serve the supplemental content in response to a request from the electronic processing system 710; and communication circuitry 758 to transmit the supplemental data in response to the request from the electronic processing system 710.

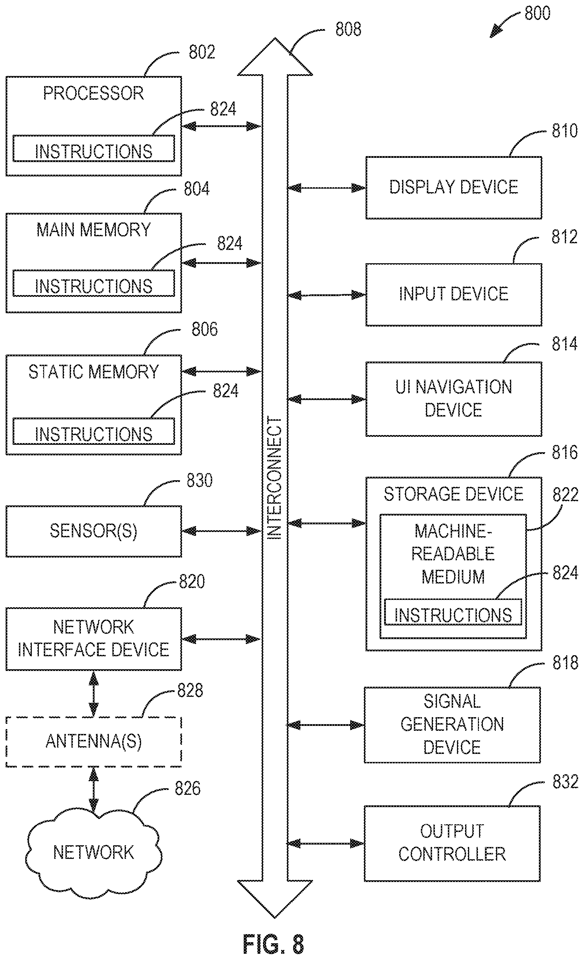

**FIG. 8** is a block diagram illustrating a machine in the example form of an electronic processing system 800, within which a set or sequence of instructions may be executed to cause the machine to perform any one of the methodologies discussed herein, according to an example embodiment. The machine may be a vehicle information or entertainment system, a personal computer (PC), a tablet PC, a personal digital assistant (PDA), a mobile telephone or smartphone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example electronic processing system 800 includes at least one processor 802 (e.g., a central processing unit (CPU), a graphics processing unit (GPU) or both, processor cores, compute nodes, etc.), a main memory 804 and a static memory 806, which communicate with each other via an interconnect 808 (e.g., a link, a bus, etc.). The electronic processing system 800 may further include a video display unit 810, an input device 812 (e.g., an alphanumeric keyboard), and a user interface (UI) control device 814 (e.g., a mouse, button controls, etc.). In one embodiment, the video display unit 810, input device 812 and UI navigation device 814 are incorporated into a touch screen display. The electronic processing system 800 may additionally include a storage device 816 (e.g., a drive unit), a signal generation device 818 (e.g., a speaker), an output controller 832 (e.g., for control of actuators, motors, and the like), a network interface device 820 (which may include or operably communicate with one or more antennas 830, transceivers, or other wireless communications hardware), and one or more sensors 826 (e.g., cameras), such as a global positioning system (GPS) sensor, compass, accelerometer, location sensor, or other sensor.

The storage device 816 includes a machine-readable medium 822 on which is stored one or more sets of data structures and instructions 824 (e.g., software) embodying or utilized by any one or more of the methodologies or functions described herein. The instructions 824 may also reside, completely or at least partially, within the main memory 804, static memory 806, and/or within the processor 802 during execution thereof by the electronic processing system 800, with the main memory 804, static memory 806, and the processor 802 also constituting machine-readable media.

While the machine-readable medium 822 is illustrated in an example embodiment to be a single medium, the term "machine-readable medium" may include a single medium or multiple media (e.g., a centralized or distributed database, and/or associated caches and servers) that store the one or more instructions 824. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks.

The instructions 824 may further be transmitted or received over a communications network 828 using a transmission medium via the network interface device 820 utilizing any one of a number of transfer protocols (e.g., HTTP). Examples of communication networks include a local area network (LAN), a wide area network (WAN), the Internet, mobile telephone networks, plain old telephone (POTS) networks, and wireless data networks (e.g., Wi-Fi, 2G/3G, and 4G LTE/LTE-A or WiMAX networks). The term "transmission medium" shall be taken to include any intangible medium that is capable of storing, encoding, or carrying instructions for execution by the machine, and includes digital or analog communications signals or other intangible medium to facilitate communication of such software.

Embodiments used to facilitate and perform the techniques described herein may be implemented in one or a combination of hardware, firmware, and software. Embodiments may also be implemented as instructions stored on a machine-readable storage device, which may be read and executed by at least one processor to perform the operations described herein. A machine-readable storage device may include any non-transitory mechanism for storing information in a form readable by a machine (e.g., a computer). For example, a machine-readable storage device may include read-only memory (ROM), random-access memory (RAM), magnetic disk storage media, optical storage media, flash-memory devices, and other storage devices and media.

It should be understood that the functional units or capabilities described in this specification may have been referred to or labeled as components or modules, in order to more particularly emphasize their implementation independence. Such components may be embodied by any number of software or hardware forms. For example, a component or module may be implemented as a hardware circuit comprising custom very-large-scale integration (VLSI) circuits or gate arrays, off-the-shelf semiconductors such as logic chips, transistors, or other discrete components. A component or module may also be implemented in programmable hardware devices such as field programmable gate arrays, programmable array logic, programmable logic devices, or the like. Components or modules may also be implemented in software for execution by various types of processors. An identified component or module of executable code may, for instance, comprise one or more physical or logical blocks of computer instructions, which may, for instance, be organized as an object, procedure, or function. Nevertheless, the executables of an identified component or module need not be physically located together, but may comprise disparate instructions stored in different locations which, when joined logically together, comprise the component or module and achieve the stated purpose for the component or module.

Indeed, a component or module of executable code may be a single instruction, or many instructions, and may even be distributed over several different code segments, among different programs, and across several memory devices or processing systems. In particular, some aspects of the described process (such as code rewriting and code analysis) may take place on a different processing system (e.g., in a computer in a data center), than that in which the code is deployed (e.g., in a computer embedded in a sensor or robot). Similarly, operational data may be identified and illustrated herein within components or modules, and may be embodied in any suitable form and organized within any suitable type of data structure. The operational data may be collected as a single data set, or may be distributed over different locations including over different storage devices, and may exist, at least partially, merely as electronic signals on a system or network. The components or modules may be passive or active, including agents operable to perform desired functions.

Additional examples of the presently described method, system, and device embodiments include the following, non-limiting configurations. Each of the following non-limiting examples may stand on its own, or may be combined in any permutation or combination with any one or more of the other examples provided below or throughout the present disclosure.

In the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment.

## Claims

1. A method (600) of performing authentication of optical camera communications from a light emitting object, the method comprising electronic operations including:
detecting (630), from image data, modulated light data emitted from the light emitting object, wherein the image data depicts the light emitting object in a field of view, and wherein the image data is captured with an image sensor;
identifying (640), from the image data, the light emitting object as a source of the modulated light data;
receiving an indication to select the light emitting object as an authenticated source of the modulated light data; and
performing (650) a command to process the modulated light data from the authenticated source, in response to the indication to select the light emitting object as the authenticated source of the modulated light data; **characterized by**
generating a graphical user interface display, the graphical user interface display including an overlay on the field of view;
obtaining supplemental data indicated in the modulated light data with operations to:
decode and parse information obtained from the modulated light data from the authenticated source, wherein the information obtained from the modulated light data indicates an identifier of the supplemental data from another data source; and
obtain the supplemental data from the another data source, using the identifier of the supplemental data; and
generating an updated graphical user interface display, as an updated overlay on the field of view, the image data based on the supplemental data from the another data source.

2. The method of claim 1, wherein the image data indicates multiple sources of available modulated light data, wherein the multiple sources include the authenticated source and another source, and wherein identifying the source of the modulated light data is performed by detecting the authenticated source as a first source of a first set of available modulated light data and detect the another source as a second source of a second set of available modulated light data.

3. The method of claim 2, wherein performing the command to process the modulated light data, includes decoding the first set of available modulated light data, and not decoding the second set of available modulated light data.

4. The method of claim 3, the electronic operations further including enabling user authentication of the authenticated source of the modulated light data, by:
including, on the graphical user interface display, an overlay on output of the image data that provides an identification of the multiple sources of available modulated light data; and
receiving the indication to select the authenticated source of the modulated light data from user input received in the graphical user interface display, the user input received upon the overlay of the output of the image data in the graphical user interface display;
wherein identifying the light emitting object includes generating the graphical user interface display to indicate the authenticated source and the another source, the indication of the authenticated source and the another source provided as an overlay of an output of the image data in the graphical user interface display.

5. The method of claim 4, the electronic operations further including outputting data selected with the user authentication of the authenticated source of the modulated light data, by:
decoding and interpreting content from the modulated light data obtained from the authenticated source; and
updating the graphical user interface display to output the decoded and interpreted content from the modulated light data.

6. The method of claim 3, the electronic operations further including enabling automatic authentication of the authenticated source of the modulated light data, by:
performing image recognition of the image data;
wherein identifying the light emitting object includes image recognition of the image data to indicate the authenticated source and the another source; and
wherein the indication to select the light emitting object as the authenticated source is provided from an image recognition technique, the image recognition technique automatically performed on an object representing the source of the modulated light data in the image data.

7. The method of claim 1, wherein the identifier is a uniform resource locator (URL), and wherein obtaining the supplemental data from the another data source includes access of the URL using a wireless communication network.

8. The method of claim 1, wherein the image data is obtained from a camera positioned in a motor vehicle to capture an image of a scene in a direction away from the motor vehicle, and wherein the modulated light data is used to generate an automated reality display of information obtained from the modulated light data that overlays the image of the scene.

9. The method of claim 8, the electronic operations further including identifying a limited area of evaluation from the image data for automatically authenticating the authenticated source, by:
identifying the limited area of evaluation of the image data based on an elevation angle of the scene in the direction away from the motor vehicle, as captured from a position of the camera;
wherein detecting the modulated light data is performed on the limited area of evaluation, and wherein identifying the modulated light data is performed on the limited area of evaluation.

10. An apparatus comprising means for performing any of the methods of claims 1-9.

11. At least one machine readable medium including instructions, which when executed by the apparatus of claim 10, cause said apparatus to perform any of the methods of claims 1-9.

12. A device (710) adapted for performing authentication of optical camera communications from a light emitting object, the device comprising:
processing circuitry (726) operable to:
detect, from image data, modulated light data emitted from the light emitting object, wherein the image data depicts the light emitting object in a field of view, and wherein the image data is captured with an image sensor;
identify, from the image data, the light emitting object as a source of the modulated light data;
receive an indication to select the light emitting object as an authenticated source of the modulated light data; and
perform a command to process the modulated light data from the authenticated source, in response to the indication to select the light emitting object as the authenticated source of the modulated light data; characterized to
generate a graphical user interface display, the graphical user interface display including an overlay on the field of view;
obtain supplemental data indicated in the modulated light data with operations to:
decode and parse information obtained from the modulated light data from the authenticated source, wherein the information obtained from the modulated light data indicates an identifier of the supplemental data from another data source; and
obtain the supplemental data from the another data source, using the identifier of the supplemental data; and
generating an updated graphical user interface display, as an updated overlay on the field of view, the image data based on the supplemental data from the another data source.

13. The device of claim 12, wherein the image data indicates multiple sources of available modulated light data, wherein the multiple sources include the authenticated source and another source, and wherein operations to identify the source of the modulated light data are performed with operations to detect the authenticated source as a first source of a first set of available modulated light data and detect the another source as a second source of a second set of available modulated light data.

14. The device of claim 13, wherein operations that perform the command to process the modulated light data, include operations to decode the first set of available modulated light data, and to not decode the second set of available modulated light data.

## Patentansprüche

1. Verfahren (600) zum Ausführen einer Authentifizierung von optischer Kamerakommunikation von einem lichtemittierenden Objekt , wobei das Verfahren elektronische Operationen umfasst, die Folgendes beinhalten:
Erkennen (630) von Daten modulierten Lichts, die von dem lichtemittierenden Objekt emittiert werden, aus Bilddaten, wobei die Bilddaten das lichtemittierende Objekt in einem Sichtfeld darstellen und wobei die Bilddaten mit einem Bildsensor aufgenommen werden,
Identifizieren (640) des lichtemittierenden Objekts als eine Quelle der Daten modulierten Lichts aus den Bilddaten,
Empfangen einer Angabe zum Auswählen des lichtemittierenden Objekts als eine authentifizierte Quelle der Daten modulierten Lichts und
Ausführen (650) eines Befehls zum Verarbeiten der Daten modulierten Lichts von der authentifizierten Quelle in Reaktion auf die Angabe zum Auswählen des lichtemittierenden Objekts als die authentifizierte Quelle der Daten modulierten Lichts, **gekennzeichnet durch**:
Erzeugen einer Anzeige einer grafischen Benutzerschnittstelle, wobei die Anzeige einer grafischen Benutzerschnittstelle eine Überlagerung auf dem Sichtfeld beinhaltet,
Gewinnen ergänzender Daten, die in den Daten modulierten Lichts angegeben sind, mit Operationen zum
Decodieren und Parsen von Informationen, die aus den Daten modulierten Lichts von der authentifizierten Quelle gewonnen werden, wobei die Informationen, die von den Daten modulierten Lichts gewonnen werden, eine Kennung der ergänzenden Daten von einer anderen Datenquelle angeben, und
Gewinnen der ergänzenden Daten von der anderen Datenquelle mit Hilfe der Kennung der ergänzenden Daten und
Erzeugen einer aktualisierten Anzeige einer grafischen Benutzerschnittstelle als eine aktualisierte Überlagerung auf dem Sichtfeld, wobei die Bilddaten auf den ergänzenden Daten von der anderen Datenquelle basieren.

2. Verfahren nach Anspruch 1, wobei die Bilddaten mehrere Quellen verfügbarer Daten modulierten Lichts angeben, wobei die mehreren Quellen die authentifizierte Quelle und eine andere Quelle beinhalten und wobei das Identifizieren der Quelle der Daten modulierten Lichts durch Erkennen der authentifizierten Quelle als eine erste Quelle eines ersten Satzes verfügbarer Daten modulierten Lichts und Erkennen der anderen Quelle als eine zweite Quelle eines zweiten Satzes verfügbarer Daten modulierten Lichts ausgeführt wird.

3. Verfahren nach Anspruch 2, wobei das Ausführen des Befehls zum Verarbeiten der Daten modulierten Lichts das Decodieren des ersten Satzes verfügbarer Daten modulierten Lichts und nicht das Dekodieren des zweiten Satzes verfügbarer Daten modulierten Lichts beinhaltet.

4. Verfahren nach Anspruch 3, wobei die elektronischen Operationen ferner das Ermöglichen einer Benutzerauthentifizierung der authentifizierten Quelle der Daten modulierten Lichts beinhalten, durch:
Einbinden, auf der Anzeige einer grafischen Benutzerschnittstelle, eine Überlagerung auf der Ausgabe der Bilddaten, die eine Identifizierung der mehreren Quellen verfügbarer Daten modulierten Lichts bereitstellt, und
Empfangen der Angabe zum Auswählen der authentifizierten Quelle der Daten modulierten Lichts von einer Benutzereingabe, die in der Anzeige einer grafischen Benutzerschnittstelle empfangen wird, wobei die Benutzereingabe auf die Überlagerung der Ausgabe der Bilddaten in der Anzeige einer grafischen Benutzerschnittstelle hin empfangen wird,
wobei das Identifizieren des lichtemittierenden Objekts das Erzeugen der Anzeige einer grafischen Benutzerschnittstelle beinhaltet, um die authentifizierte Quelle und die andere Quelle anzugeben, wobei die Angabe der authentifizierten Quelle und der anderen Quelle als eine Überlagerung auf einer Ausgabe der Bilddaten in der Anzeige einer grafischen Benutzerschnittstelle bereitgestellt werden.

5. Verfahren nach Anspruch 4, wobei die elektronischen Operationen ferner das Ausgeben von Daten beinhalten, die mit der Benutzerauthentifizierung der authentifizierten Quelle der Daten modulierten Lichts ausgewählt werden durch:
Decodieren und Interpretieren von Inhalt der Daten modulierten Lichts, die von der authentifizierten Quelle gewonnen werden, und
Aktualisieren der Anzeige einer grafischen Benutzerschnittstelle zum Ausgeben des decodierten und interpretierten Inhalts der Daten modulierten Lichts.

6. Verfahren nach Anspruch 3, wobei die elektronischen Operationen ferner das Ermöglichen automatischer Authentifizierung der authentifizierten Quelle der Daten modulierten Lichts beinhalten durch:
Ausführen einer Bilderkennung der Bilddaten,
wobei das Identifizieren des lichtemittierenden Objekts eine Bilderkennung der Bilddaten zum Angeben der authentifizierten Quelle und der anderen Quelle beinhaltet und
wobei die Angabe zum Auswählen des lichtemittierenden Objekts als die authentifizierte Quelle von einer Bilderkennungstechnik bereitgestellt wird, wobei die Bilderkennungstechnik an einem Objekt, das die Quelle der Daten modulierten Lichts in den Bilddaten darstellt, automatisch ausgeführt wird.

7. Verfahren nach Anspruch 1, wobei die Kennung eine URL (Uniform Resource Locator) ist und wobei das Gewinnen der ergänzenden Daten von der anderen Datenquelle den Zugriff auf die URL mit Hilfe eines drahtlosen Kommunikationsnetzes beinhaltet.

8. Verfahren nach Anspruch 1, wobei die Bilddaten von einer Kamera gewonnen werden, die in einem Kraftfahrzeug positioniert ist, um ein Bild einer Szene in einer Richtung weg von dem Kraftfahrzeug aufzunehmen, und wobei die Daten modulierten Lichts verwendet werden, um eine automatisierte Realitätsanzeige von Informationen zu erzeugen, die aus den Daten modulierten Lichts gewonnen werden, welche das Bild der Szene überlagern.

9. Verfahren nach Anspruch 8, wobei die elektronischen Operationen ferner das Identifizieren eines begrenzten Bereichs von Bewertung aus den Bilddaten zum automatischen Authentifizieren der authentifizierten Quelle beinhaltet durch:
Identifizieren des begrenzten Bereichs von Bewertung der Bilddaten basierend auf einem Höhenwinkel der Szene in der Richtung weg von dem Kraftfahrzeug, wie von einer Position der Kamera aus aufgenommen,
wobei das Erkennen der Daten modulierten Lichts an dem begrenzten Bereich der Bewertung ausgeführt wird und wobei das Identifizieren der Daten modulierten Lichts an dem begrenzten Bereich der Bewertung ausgeführt wird.

10. Vorrichtung, Mittel zum Ausführen eines der Verfahren nach den Ansprüchen 1 bis 9 umfassend.

11. Mindestens ein maschinenlesbares Medium, das Befehle beinhaltet, die bei Ausführung durch die Vorrichtung nach Anspruch 10 die Vorrichtung veranlassen, eines der Verfahren nach den Ansprüchen 1 bis 9 auszuführen.

12. Gerät (710), dafür eingerichtet, eine Authentifizierung von optischer Kamerakommunikation von einem lichtemittierenden Objekt auszuführen, wobei das Gerät Folgendes umfasst:
eine Verarbeitungsschaltung (726), die für Folgendes funktionsfähig ist:
Erkennen von Daten modulierten Lichts, die von dem lichtemittierenden Objekt emittiert werden, aus Bilddaten, wobei die Bilddaten das lichtemittierende Objekt in einem Sichtfeld darstellen und wobei die Bilddaten mit einem Bildsensor aufgenommen werden,
Identifizieren des lichtemittierenden Objekts als eine Quelle der Daten modulierten Lichts aus den Bilddaten,
Empfangen einer Angabe zum Auswählen des lichtemittierenden Objekts als eine authentifizierte Quelle der Daten modulierten Lichts und
Ausführen eines Befehls zum Verarbeiten der Daten modulierten Lichts von der authentifizierten Quelle in Reaktion auf die Angabe zum Auswählen des lichtemittierenden Objekts als die authentifizierte Quelle der Daten modulierten Lichts, **gekennzeichnet durch**:
Erzeugen einer Anzeige einer grafischen Benutzerschnittstelle, wobei die Anzeige einer grafischen Benutzerschnittstelle eine Überlagerung auf dem Sichtfeld beinhaltet,
Gewinnen ergänzender Daten, die in den Daten modulierten Lichts angegeben sind, mit Operationen zum
Decodieren und Parsen von Informationen, die aus den Daten modulierten Lichts von der authentifizierten Quelle gewonnen werden, wobei die Informationen, die von den Daten modulierten Lichts gewonnen werden, eine Kennung der ergänzenden Daten von einer anderen Datenquelle angeben, und
Gewinnen der ergänzenden Daten von der anderen Datenquelle mit Hilfe der Kennung der ergänzenden Daten und
Erzeugen einer aktualisierten Anzeige einer grafischen Benutzerschnittstelle als eine aktualisierte Überlagerung auf dem Sichtfeld, wobei die Bilddaten auf den ergänzenden Daten von der anderen Datenquelle basieren.

13. Gerät nach Anspruch 12, wobei die Bilddaten mehrere Quellen verfügbarer Daten modulierten Lichts angeben, wobei die mehreren Quellen die authentifizierte Quelle und eine andere Quelle beinhalten und wobei Operationen zum Identifizieren der Quelle der Daten modulierten Lichts mit Operationen zum Erkennen der authentifizierten Quelle als eine erste Quelle eines ersten Satzes verfügbarer Daten modulierten Lichts und zum Erkennen der anderen Quelle als eine zweite Quelle eines zweiten Satzes verfügbarer Daten modulierten Lichts ausgeführt werden.

14. Gerät nach Anspruch 13, wobei Operationen, die den Befehl zum Verarbeiten der Daten modulierten Lichts ausführen, Operationen zum Decodieren des ersten Satzes verfügbarer Daten modulierten Lichts und zum Nicht-Decodieren des zweiten Satzes verfügbarer Daten modulierten Lichts beinhalten.

## Revendications

1. Procédé (600) d'exécution de l'authentification de communications de caméra optique venant d'un objet électroluminescent, ce procédé comprenant des opérations électroniques comprenant :
la détection (630), à partir de données d'image, de données de lumière modulée émises depuis l'objet électroluminescent, les données d'image représentant l'objet électroluminescent dans un champ de vision, et les données d'image étant capturées avec un capteur d'image ;
l'identification (640), à partir des données d'image, de l'objet électroluminescent comme une source des données de lumière modulée ;
la réception d'une indication pour sélectionner l'objet électroluminescent comme une source authentifiée des données de lumière modulée ; et
l'exécution (650) d'une commande pour traiter les données de lumière modulée venant de la source authentifiée, en réponse à l'indication de sélectionner l'objet électroluminescent comme la source authentifiée des données de lumière modulée ; **caractérisé par**
la génération d'un affichage d'interface utilisateur graphique, cet affichage d'interface utilisateur graphique comprenant une superposition sur le champ de vision ;
l'obtention de données supplémentaires indiquées dans les données de lumière modulée avec des opérations pour :
décoder et analyser des informations obtenues des données de lumière modulée venant de la source authentifiée, ces informations obtenues des données de lumière modulée indiquant un identifiant des données supplémentaires venant d'une autre source de données ; et pour
obtenir les données supplémentaires à partir de l'autre source de données, en utilisant l'identifiant des données supplémentaires ; et
la génération d'un affichage d'interface utilisateur graphique mis à jour, comme une superposition mise à jour sur le champ de vision, les données d'image étant basées sur les données supplémentaires venant de l'autre source de données.

2. Procédé selon la revendication 1, dans lequel les données d'image indiquent des sources multiples de données de lumière modulée disponibles, ces sources multiples comprenant la source authentifiée et une autre source, et l'identification de la source des données de lumière modulée étant exécutée en détectant la source authentifiée comme une première source d'un premier ensemble de données de lumière modulée disponibles et en détectant l'autre source comme une deuxième source d'un deuxième ensemble de données de lumière modulée disponibles.

3. Procédé selon la revendication 2, dans lequel l'exécution de la commande de traitement des données de lumière modulée comprend le décodage du premier ensemble de données de lumière modulée disponibles, et pas le décodage du deuxième ensemble de données de lumière modulée modulée.

4. Procédé selon la revendication 3, les opérations électroniques comprenant en outre le fait de permettre l'authentification par l'utilisateur de la source authentifiée des données de lumière modulée, en :
comprenant, sur l'affichage d'interface utilisateur graphique, une superposition sur la sortie des données d'image qui fournit une identification des sources multiples de données de lumière modulée disponibles ; et en
recevant l'indication de sélectionner la source authentifiée des données de lumière modulée venant d'une entrée utilisateur reçue dans l'affichage d'interface utilisateur graphique, l'entrée utilisateur étant reçue lors de la superposition de la sortie des données d'image dans l'affichage d'interface utilisateur graphique ;
l'identification de l'objet électroluminescent comprenant la génération de l'affichage d'interface utilisateur graphique pour indiquer la source authentifiée et l'autre source, l'indication de la source authentifiée et de l'autre source étant fournie comme une superposition d'une sortie des données d'image dans l'affichage d'interface utilisateur graphique.

5. Procédé selon la revendication 4, les opérations électroniques comprenant en outre la fourniture des données sélectionnées avec l'authentification par l'utilisateur de la source authentifiée des données de lumière modulée, en :
décodant et en interprétant le contenu venant des données de lumière modulée obtenues à partir de la source authentifiée ; et en
mettant à jour l'affichage d'interface utilisateur graphique afin de fournir le contenu décodé et interprété venant des données de lumière modulée.

6. Procédé selon la revendication 3, les opérations électroniques comprenant en outre le fait de permettre l'authentification de la source authentifiée des données de lumière modulée, en :
exécutant une reconnaissance d'image des données d'image ;
l'identification de l'objet électroluminescent comprenant une reconnaissance d'image des données d'image pour indiquer la source authentifiée et l'autre source ; et
l'indication de sélectionner l'objet électroluminescent comme la source authentifiée étant fournie à partir d'une technique de reconnaissance d'image, cette technique de reconnaissance d'image étant exécutée automatiquement sur un objet représentant la source des données de lumière modulée dans les données d'image.

7. Procédé selon la revendication 1, dans lequel l'identifiant est une adresse universelle (URL), et l'obtention des données supplémentaires à partir de l'autre source de données comprenant l'accès de l'adresse URL en utilisant un réseau de communication sans fil.

8. Procédé selon la revendication 1, dans lequel les données d'image sont obtenues à partir d'une caméra positionnée dans véhicule automobile pour capturer une image d'une scène dans une direction s'éloignant du véhicule automobile, et dans lequel les données de lumière modulée sont utilisées pour générer un affichage de réalité automatisé d'informations obtenues à partir des données de lumière modulée qui sont superposées sur l'image de la scène.

9. Procédé selon la revendication 8, les opérations électroniques comprenant en outre l'identification d'une zone limitée d'évaluation à partir des données d'image afin d'identifier automatiquement la source authentifiée, en :
identifiant la zone limitée d'évaluation des données d'image en se basant sur un angle d'élévation de la scène dans la direction s'éloignant du véhicule automobile, tel que capturé depuis une position de la caméra ;
la détection des données de lumière modulée étant exécutée sur la zone limitée d'évaluation, et l'identification des données de lumière modulée étant exécutée sur la zone limitée d'évaluation.

10. Appareil comprenant un moyen pour exécuter l'un quelconque des procédés selon les revendications 1 à 9.

11. Au moins un support lisible par machine comprenant des instructions qui, lorsqu'elles sont exécutées par l'appareil selon la revendication 10, font exécuter audit appareil l'un quelconque des procédés selon les revendications 1 à 9.

12. Dispositif (710) adapté pour exécuter l'authentification de communications de caméra optique venant d'un objet électroluminescent, ce dispositif comprenant :
des circuits de traitement (726) pouvant être utilisés de façon à :
détecter, à partir de données d'image, des données de lumière modulée émises depuis l'objet électroluminescent, les données d'image représentant l'objet électroluminescent dans un champ de vision, et les données d'image étant capturées avec un capteur d'image ;
identifier, à partir des données d'image, l'objet électroluminescent comme une source des données de lumière modulée ;
recevoir une indication pour sélectionner l'objet électroluminescent comme une source authentifiée des données de lumière modulée ; et à
exécuter une commande pour traiter les données de lumière modulée venant de la source authentifiée, en réponse à l'indication de sélectionner l'objet électroluminescent comme la source authentifiée des données de lumière modulée ; caractérisé de façon à
générer un affichage d'interface utilisateur graphique, cet affichage d'interface utilisateur graphique comprenant une superposition sur le champ de vision ;
obtenir des données supplémentaires indiquées dans les données de lumière modulée avec des opérations pour :
décoder et analyser des informations obtenues à partir des données de lumière modulée venant de la source authentifiée, ces informations obtenues à partir des données de lumière modulée indiquant un identifiant des données supplémentaires venant d'une autre source de données ; et pour
obtenir les données supplémentaires venant de l'autre source de données, en utilisant l'identifiant des données supplémentaires ; et de façon à
générer un affichage d'interface utilisateur graphique mis à jour, comme une superposition mise à jour sur le champ de vision, les données d'image étant basées sur les données supplémentaires venant de l'autre source de données.

13. Dispositif selon la revendication 12, dans lequel les données d'image indiquent des sources multiples de données de lumière modulée disponibles, ces sources multiples comprenant la source authentifiée et une autre source, et les opérations pour identifier la source des données de lumière modulée étant exécutées avec des opérations pour détecter la source authentifiée comme une première source d'un premier ensemble de données de lumière modulée disponibles et pour détecter l'autre source comme une deuxième source d'un deuxième ensemble de données de lumière modulée disponibles.

14. Dispositif selon la revendication 13, dans lequel les opérations qui exécutent la commande de traitement des données de lumière modulée comprennent des opérations pour décoder le premier ensemble de données de lumière modulée disponibles, et pour ne pas décoder le deuxième ensemble de données de lumière modulée disponibles.
